# EUROPÄISCHE PATENTSCHRIFT

(11) **EP 3 752 375 B1**
(45) Veröffentlichungstag und Bekanntmachung des Hinweises auf die Patenterteilung: **26.05.2021**
(21) Anmeldenummer: 19705152.7
(22) Anmeldetag: 11.02.2019
(51) Int. Cl.: B60D 1/62, B60R 1/00, B60R 11/04, B60R 11/00, B60D 1/36

(54) **MOBILE SENSORVORRICHTUNG FÜR EINEN SATTELZUG, ANORDNUNG VON MOBILEN SENSORVORRICHTUNGEN AN EINEM SATTELAUFLIEGER, VERFAHREN ZUM ERFASSEN VON INFORMATIONEN FÜR EINEN SATTELZUG, ZENTRALEINRICHTUNG UND SATTELZUGMASCHINE**
MOBILE SENSOR DEVICE FOR A TRACTOR-TRAILER COMBINATION, ARRANGEMENT OF MOBILE SENSOR DEVICES ON A SEMITRAILER, METHOD FOR ACQUIRING INFORMATION FOR A TRACTOR-TRAILER COMBINATION, CENTRAL UNIT, AND TRACTOR
DISPOSITIF DE DÉTECTION MOBILE POUR UNE SEMI-REMORQUE, AGENCEMENT DE DISPOSITIFS DE DÉTECTION MOBILES SUR UNE SEMI-REMORQUE, PROCÉDÉ DE COLLECTE D'INFORMATIONS POUR UNE SEMI-REMORQUE, DISPOSITIF CENTRAL ET TRACTEUR DE SEMI-REMORQUE

(30) Priorität: 16.02.2018 DE 102018103537
(43) Veröffentlichungstag der Anmeldung: 23.12.2020
(73) Patentinhaber: SAF-HOLLAND GmbH, 63856 Bessenbach (DE)
(72) Erfinder: HARTMANN, Mark, 63869 Heigenbrücken (DE); BRUNSCH, Bernd, 63303 Dreieich (DE)
(74) Vertreter: Müller Schupfner & Partner Patent- und Rechtsanwaltspartnerschaft mbB
(86) Internationale Anmeldenummer: PCT/EP2019/053274
(87) Internationale Veröffentlichungsnummer: WO 2019/158468

(56) Entgegenhaltungen:
- EP-A1- 2 042 352
- WO-A1-2015/074016
- DE-A1-102017 111 530
- US-A1- 2016 381 292

## Beschreibung

Die vorliegende Erfindung betrifft eine mobile Sensorvorrichtung für einen Sattelzug, eine Anordnung von mobilen Sensorvorrichtungen, ein Verfahren zum Erfassen von Informationen für einen Sattelzug, eine Zentraleinrichtung und eine Sattelzugmaschine.

Glieder- oder Sattelzüge bestehen typischerweise aus einer Sattelzugmaschine bzw. einem Motorwagen und einem Sattelauflieger bzw. Anhänger, wobei der Sattelauflieger über einen entsprechenden Kopplungsmechanismus an die Sattelzugmaschine anbindbar ist. Für das ordnungsgemäße Ankoppeln müssen die Sattelzugmaschine und der Sattelauflieger zueinander ausgerichtet bzw. rangiert werden und in einen kopplungsbereiten Zustand überführt werden. Zur Unterstützung eines Fahrzeugführers bzw. zum zumindest partiell automatisierten Ankoppeln hat es sich als hilfreich herausgestellt, entsprechende zum Ankoppeln nutzbare Informationen, beispielsweise in Form einer Rückraumüberwachung, bereitzustellen. Die genannte Rückraumüberwachung gestattet es beispielsweise, einen zum Rangieren erforderlichen Platzbedarf zu erfassen, und beim Ausrichten des Sattelzugs zu berücksichtigen. Beispielsweise werden zur Rückraumüberwachung mittels Kameras Bereiche hinter dem Sattelauflieger erfasst, die andernfalls nicht unmittelbar einsehbar sind. Insbesondere kann ein Abstand zu Gegenständen erfasst werden, die ein Hindernis beim Rangieren des Sattelzugs darstellen.

Die DE 10 2017 111 530 A1 offenbart einen Pick-up als Zugfahrzeug (10), der einen Anhänger (8) zieht. Am hinteren Ende des Anhängers (8) befindet sich eine Kamera (44), die auf den Rückraum des Anhängers (8) gerichtet ist. Dabei tauscht die Kamera (44) über eine Übermittlungseinrichtung (42) Informationen mit einer Zentraleinrichtung (40) aus.

Die WO 2015 0 741 016 A1 zeigt ein System und ein Verfahren zur Verwendung eines Anhängerkupplungs-Verbindungssystems, um ein Fahrzeug an einem Anhänger zu befestigen. Das Anhängerkupplungs-Verbindungssystem umfasst mindestens eine Kamera und eine Steuereinheit. Die Kamera ist dazu konfiguriert, Bilddaten einer Fahrzeuganhängerkupplung und eines Anhängerkopplers zu erfassen. Die Steuereinheit ist dazu konfiguriert, ein Draufsicht auf der Basis der Bilddaten zu erzeugen.

Allerdings mangelt es älteren Sattelaufliegern oftmals an Aufnahmeeinrichtungen zur Erfassung der entsprechenden Information, wie z. B an einer Kamera.

Es ist eine Aufgabe der vorliegenden Erfindung, Informationen zum Betriebszustand eines Sattelzugs bereitzustellen, insbesondere wenn in den Sattelauflieger keine Aufnahmeeinrichtung integriert ist.

Diese Aufgabe wird gelöst durch eine mobile Sensorvorrichtung gemäß Anspruch 1, durch eine Anordnung von mobilen Sensorvorrichtungen an einem Sattelauflieger gemäß Anspruch 8, durch eine Zentraleinrichtung gemäß Anspruch 9 und durch ein Verfahren gemäß Anspruch 10. Weitere Vorteile und Merkmale der Erfindung ergeben sich aus den Unteransprüchen sowie der Beschreibung und den beigefügten Figuren.

Erfindungsgemäß ist eine mobile Sensorvorrichtung für eine Fahrzeugkombination mit einer Zugmaschine und einem Anhänger, insbesondere einen Sattelzug mit einer Sattelzugmaschine und einem Sattelauflieger, vorgesehen, umfassend
- eine Aufnahmeeinrichtung zum Erfassen einer Information, wie. z.B. eine Kamera,
- eine Übermittelungseinrichtung zur Übermittelung der Information an eine Zentraleinrichtung und
- einen Anschlussbereich zum lösbaren Ankoppeln der mobilen Sensorvorrichtung an den Sattelauflieger.

Mittels der erfindungsgemäßen mobilen Sensorvorrichtung ist es in vorteilhafter Weise möglich, solche Sattelauflieger mit einer Aufnahmeeinrichtung auf- bzw. auszurüsten, in die noch keine Aufnahmeeinrichtung integriert ist. Insbesondere lassen sich Sattelauflieger bedarfsabhängig aufrüsten. Darüber hinaus erlaubt es die mobile Sensorvorrichtung, dass sie für eine Vielzahl von Sattelzugmaschinen genutzt werden kann. D. h. mehrere Sattelauflieger, die für eine Sattelzugmaschine vorgesehen sind, können sich eine mobile Sensorvorrichtung teilen. Zudem muss am Sattelauflieger keine Aufnahmeeinrichtung integriert werden, so dass kein entsprechender Bauraumbedarf am Sattelauflieger berücksichtigt werden muss. Vorzugsweise handelt es sich bei den Informationen um für das Ankoppeln des Sattelaufliegers an die Sattelzugmaschine relevante Informationen, die für das Ankoppeln des Sattelaufliegers an die Sattelzugmaschine herangezogen werden können. Beispielsweise umfasst die Information eine visuelle Aufnahme eines Teilbereichs im Umfeld des Sattelaufliegers und/oder der Sattelzugmaschine, der beispielsweise zur Rückraumüberwachung aufgenommen wird. Grundsätzlich dient die Zentraleinrichtung, beispielsweise ein Bordcomputer der Sattelzugmaschine, dem Sammeln von Informationen. Dabei ist es vorstellbar, dass die Zentraleinrichtung dazu ausgelegt ist, Informationen von mehreren mobilen Sensorvorrichtungen zu empfangen und zu verarbeiten, beispielsweise zusammenzufügen. Ferner ist es denkbar, dass die verschiedenen Informationen von der Zentraleinrichtung zusammengefügt und/oder dem Fahrzeugführer bzw. einem System zum automatisierten Ankoppeln von Sattelzugmaschine und Sattelauflieger, bereitgestellt werden. Beispielsweise erfolgt das Bereitstellen der erfassten Informationen über ein Display bzw. einen Bildschirm an der Zentraleinrichtung. Weiterhin ist es vorstellbar, dass mehrere mobile Sensorvorrichtungen vorgesehen sind, wobei sich eine Aufnahmeeinrichtung einer mobilen Sensoreinrichtung eines ersten Typs von einer Aufnahmeeinrichtung einer mobilen Sensoreinrichtung eines zweiten Typs unterscheidet, beispielsweise in Hinblick auf ihr Erfassungsvermögen (z. B. den erfassbaren Raumwinkelbereich bei einer Kamera) und/oder die erfassten Informationen (z. B. wird ein Bild oder eine Messgröße aufgenommen). Zur Unterscheidung verfügen die mobilen Sensorvorrichtungen des ersten Typs und die mobilen Sensorvorrichtungen des zweiten Typs beispielsweise über verschiedene visuelle Kennzeichnungen, z. B. über verschiedene Farben für die unterschiedlichen Typen. Über den Anschlussbereich ist es mit Vorteil möglich, die mobile Sensorvorrichtung am Sattelauflieger reversibel zu montieren, vorzugsweise werkzeuglos bzw. ohne daß es weiterer Werkzeuge bedarf. Hierzu ist der Anschlussbereich lösbar an den Sattelauflieger ankoppelbar, beispielsweise über ein Kopplungsmechanismus. Dieser Anschlussbereich gestattet es mit Vorteil, die mobile Sensorvorrichtung nach Bedarf an dem Sattelauflieger anzubringen. Vorzugsweise lässt sich die mobile Sensorvorrichtung an verschiedenen Positionen montieren. Weiterhin ist es vorzugsweise vorgesehen, dass die Kommunikation der Übermittelungseinrichtung mit der Zentraleinrichtung drahtlos erfolgt. Vorzugsweise erfolgt die Kommunikation über ein elektromagnetisches Signal, insbesondere Bluetooth-Signal und/oder ein Funksignal. Vorstellbar ist auch, dass die Übermittelungseinrichtung mit der Zentraleinrichtung kommuniziert, beispielsweise über bereits in den Sattelauflieger integrierte Leitungen. Weiterhin ist die Übermittelungseinrichtung derart konfiguriert, dass die erfassten Informationen nach einem festgelegten bzw. einstellbaren Zeitintervall an die Zentraleinrichtung übersandt werden. Vorzugweise erfolgt die Übersendung unmittelbar, um eine direkte Echtzeitinformation für das Ankoppeln direkt nutzen zu können und schnell auf Änderungen reagieren zu können. Denkbar ist auch, dass die Übermittelungseinrichtung nur einen ausgewählten Teil und/oder einen bereits vorverarbeiteten Teil der Informationen übermittelt. Ferner ist es vorstellbar, dass die Übermittelungseinrichtung Teil einer Leitung ist, die zur Datenübermittlung mit der Sattelzugmaschine elektrisch verbunden wird. Erfindungsgemäß werden bereits vorhandene Leitungen im Sattelauflieger zur Übermittelung der Informationen genutzt. Ein weiterer Vorteil der mobilen Sensorvorrichtung ist darin zu sehen, dass die mobile Sensorvorrichtung, beispielsweise nach dem Ankoppeln, wieder lösbar ist. Infolgedessen kann die Aufnahmeeinrichtung bzw. die Sensorvorrichtung bei der Fahrt des Sattelzuges nicht zum Luftwiderstand beitragen.

Zweckmäßigerweise ist es vorgesehen, dass die Sensorvorrichtung über den Anschlussbereich kraft- und/oder formschlüssig mit dem Anhänger bzw. dem Sattelauflieger verbindbar ist. Dadurch lässt sich die mobile Sensorvorrichtung unter Berücksichtigung der zu erwartenden Umstände sicher am Sattelauflieger fixieren. Vorzugsweise ist ein Kopplungsmechanismus vorgesehen, der derart konfiguriert ist, dass die mobile Sensorvorrichtung werkzeugfrei an dem Sattelauflieger montierbar ist. Dadurch lässt sich die mobile Sensorvorrichtung schnell und ohne großen Aufwand am Sattelauflieger befestigen. Vorstellbar ist auch, dass der Kopplungsmechanismus eine sattelaufliegerseitige Komponente und eine sensorseitige Komponente umfasst. Dadurch lässt sich die sattelaufliegerseitige Komponente positionsfest montieren. Bei einer späteren Montage der Sensorvorrichtung kann so diese an einem festgelegten und reproduzierbaren Platz montiert werden. Beispielsweise umfasst die sattelaufliegerseitige Komponente eine Schiene mit Hinterschneidungen bzw. eine Schwalbenschwanzführung, in die die sensorseitige Komponente hineingeschoben wird, vorzugsweise bis sie verrastet.

Beispielsweise umfasst der Anschlussbereich einen Schnellspanner, einen Magneten und/oder einen Saugnapf. Dadurch lässt sich mit Vorteil die mobile Sensorvorrichtung einfach und schnell am Sattelauflieger montieren. Bei der Verwendung eines Magneten und/oder Saugnapfs ist es in vorteilhafter Weise möglich, die mobile Sensorvorrichtung an eine beliebige Stelle zu montieren, sofern sie dazu geeignet ist.

Vorzugsweise umfasst die Aufnahmeeinrichtung eine Kamera, einen Kraftsensor, einen Neigungssensor, einen LIDAR-Sensor und/oder einen RADAR-Sensor. Die Kamera lässt sich mit Vorteil zur Rückraumüberwachung zumindest eines den Sattelauflieger umgebenden Teilbereichs nutzen. Mittels des Kraftsensors lässt sich beispielswiese ein Beladungszustand des Sattelaufliegers erfassen. Dieser kann mit Vorteil zusätzlich für das Rangieren bzw. Ankoppeln berücksichtigt werden. Mit dem Neigungssensor lässt sich mit Vorteil feststellen, ob eine Längsachse des Sattelaufliegers parallel zur Fahrbahn oder dazu geneigt verläuft. Ferner ist ein Sensor zur Überwachung eines Stützelements vorgesehen. Der LIDAR-Sensor und/oder der RADAR-Sensor lassen sich mit Vorteil zur Erfassung von Hindernissen in der Umgebung des Sattelzuges nutzen. Es ist auch vorstellbar, dass jede Sensorvorrichtung mehrere verschiedene Aufnahmeeinrichtungen umfasst. Dabei ist es auch vorstellbar, dass nur eine der Aufnahmeeinrichtungen - abhängig von ihrer Position am Sattelauflieger - Informationen über die Übermittelungseinrichtung versendet. Dadurch lässt sich die mobile Sensorvorrichtung universell an verschiedene Positionen platzieren. Beispielsweise lässt sich mittels eines Schalters die gewünschte Aufnahmeeinrichtung aktivieren. Vorstellbar ist auch, dass die mobile Sensorvorrichtung selbstständig ihre Position am Sattelauflieger erkennt und automatisch die passende Aufnahmeeinrichtung auswählt.

Zweckmäßigerweise ist es vorgesehen, dass die Aufnahmevorrichtung gegenüber dem Anschlussbereich verschwenkbar und/oder verschiebbar ist. Dadurch lässt sich die Aufnahmevorrichtung mit Vorteil nach der Montage der mobilen Sensorvorrichtung zur Feineinstellung entsprechend ausrichten. Beispielsweise umfasst der Anschlussbereich hierzu ein Gelenk, insbesondere ein Kugelgelenk. Dadurch kann z. B. die Kamera gezielt auf einen Teilbereich im Umfeld des Sattelaufliegers ausgerichtet werden. Vorzugsweise umfasst die mobile Sensorvorrichtung eine Antriebseinrichtung, wie z. B. einen Elektromotor, mit dem die Aufnahmevorrichtung ferngesteuert ausgerichtet werden kann.

Vorzugsweise ist die Zentraleinrichtung in die Zugmaschine bzw. Sattelzugmaschine, insbesondere einen Bordcomputer der Sattelzugmaschine oder eine externe Steuerzentrale, integriert. Beispielsweise ist die Zentraleinrichtung in einem Bordcomputer im Führerhaus der Sattelzugmaschine vorgesehen. Dadurch kann mit Vorteil im Führerhaus das Ankoppeln überwacht werden. Beispielsweise werden die in der Zentraleinrichtung gesammelten und zusammengefügten Informationen an einem Bildschirm visualisiert. Dadurch kann ein Fahrzeugführer ggf. eingreifen, sofern er ein Problem erkennt. Denkbar ist auch, dass die Kopplung durch eine externe Steuerzentrale koordiniert wird. Als externe Steuerzentrale sind beispielsweise ein Computer, ein Smartphone und/oder ein Tablet vorstellbar. Dadurch kann die Kopplung überwacht werden, ohne dass das Führerhaus besetzt werden muss. Insbesondere ist die Übermittelungseinrichtung abhängig von der Position der Zentraleinrichtung gestaltet. Sofern die Zentraleinrichtung in das Führerhaus integriert ist, sind vergleichsweise niedrige Übertragungsleistungen für die Übermittelung der Informationen erforderlich, während höhere Übertragungsleistungen bei der Verwendung von externen Zentraleinrichtungen bereitgestellt werden müssen.

Insbesondere ist der Anschlussbereich sattelaufliegerunabhängig ausgestaltet. Dadurch lässt sich die mobile Sensorvorrichtung für mehrere Typen von Sattelaufliegern nutzen. Entsprechend reicht es aus, wenn in der Sattelzugmaschine die mobile Sensorvorrichtung mitgeführt wird und unabhängig vom Typ des Sattelaufliegers montierbar ist. Dadurch ist es mit Vorteil nicht erforderlich, für jeden Sattelauflieger eine passende mobile Sensorvorrichtung bereitzustellen.

Zweckmäßigerweise ist die mobile Sensoreinrichtung an eine Außenwand des Sattelaufliegers bzw. des Anhängers anbringbar. Dadurch ist es in vorteilhafter Weise nicht erforderlich, einen entsprechenden Bauraum für die erforderlichen Aufnahmeeinrichtungen im Sattelauflieger freizuhalten bzw. zu modifizieren. Vorzugsweise ist die Aufnahmeeinrichtung und/oder der Anschlussbereich witterungsbeständig ausgestaltet, beispielsweise in einem entsprechenden Gehäuse bzw. vor Regen geschützt gelagert. Denkbar ist auch eine, vorzugsweise transparente, Hülle, die die mobile Sensorvorrichtung im montierten Zustand schützt. Vorzugsweise ist die mobile Sensorvorrichtung zur Montage an einer Seitenwand, an einem Unterboden oder einer Dachwand des Sattelaufliegers ausgelegt.

Ein weiterer Aspekt der vorliegenden Erfindung betrifft eine Anordnung von mobilen Sensorvorrichtungen, insbesondere der vorstehend beschriebenen Sensorvorrichtungen, an einem Sattelauflieger bzw. Anhänger, wobei die mobilen Sensorvorrichtungen derart angeordnet und/oder ausgerichtet sind, dass anhand der von den Sensorvorrichtungen, insbesondere der von Aufnahmeeinrichtungen der mobilen Sensorvorrichtungen, erfassten Informationen
- eine relative Ausrichtung zwischen Sattelzugmaschine bzw. Zugmaschine und Sattelauflieger bzw. Anhänger, insbesondere in einem angekoppelten und einem ungekoppelten Zustand und/oder
- eine Kopplungsbereitschaft des Sattelaufliegers bzw. des Anhängers bestimmbar ist. Beispielsweise werden die mobilen Sensorvorrichtungen derart am Sattelauflieger montiert, dass sich z.B. von Kameras erfasste Teilbereiche zumindest bereichsweise überschneiden, so dass die zusammengefassten Teilbereich eine Art Panoramaüberblick bereitstellen können. Vorzugsweise werden die mobilen Sensorvorrichtungen desselben Typs auf derselben Höhe, d. h. im selben Abstand zur Fahrbahn angeordnet. Vorstellbar ist auch, dass die mobilen Sensorvorrichtungen jeweils an Bereichen des Sattelaufliegers montierbar sind, die mit visuellen Kennzeichnungen erkennbar gemacht wurden. So lässt sich das richtige Anordnen der mobilen Sensorvorrichtungen mit Vorteil erleichtern. Weiterhin ist es vorstellbar, dass die mobilen Sensorvorrichtungen untereinander, beispielsweise mittels der Übermittelungseinrichtung, miteinander kommunizieren, insbesondere dass sie sich über ihre relative Lage austauschen. Denkbar wäre z. B. dass die mobile Sensorvorrichtung zu erkennen gibt, dass ihr Abstand zur nächsten mobilen Sensorvorrichtung zu klein oder zu groß ist. Weiterhin ist es bevorzugt vorgesehen, dass die Übermittelungseinrichtungen der mobilen Sensoreinrichtungen miteinander synchronisiert bzw. miteinander abgestimmt sind, so dass die Zentraleinrichtung beispielsweise die Herkunft der einzelnen Informationen unterscheiden bzw. zuordnen kann. Alle für die erfindungsgemäße mobile Sensorvorrichtung beschriebenen Merkmale und deren Vorteile lassen sich sinngemäß ebenfalls auf die erfindungsgemäße Anordnung übertragen und andersherum.

Vorzugsweise sind eine vordere mobile Sensorvorrichtung in einem Frontbereich des Sattelaufliegers bzw. des Anhängers und zwei in einer Querrichtung zueinander versetzt angeordnete seitliche mobile Sensorvorrichtungen vorgesehen, wobei die seitlichen mobilen Sensorvorrichtungen in Fahrtrichtung gesehen hinter der vorderen mobilen Sensorvorrichtung angeordnet sind, wobei vorzugsweise die vordere mobile Sensorvorrichtung und die seitlichen mobilen Sensorvorrichtungen in einem Schnittstellenbereich zwischen Sattelzugmaschine bzw. Zugmaschine und Sattelauflieger bzw. Anhänger, insbesondere an einer Unterseite des Sattelaufliegers, angeordnet sind. Vorzugsweise sind die vordere mobile Sensorvorrichtung und die seitlichen mobilen Sensorvorrichtungen dazu ausgelegt bzw. angeordnet, einen Abstand bzw. eine Abstandänderung zur mobilen Sattelzugmaschine zu erfassen. Dadurch ist es mit Vorteil möglich, eine relative Ausrichtung der Sattelzugmaschine zum Sattelauflieger festzustellen, insbesondere im gekoppelten Zustand, beispielsweise beim Einschlagen eines Fahrtrichtungswechsel (nach rechts oder links) oder im Falle einer Verkippung der Sattelzugsmaschine gegenüber einer Mittelebene des Sattelaufliegers.

Zweckmäßigerweise ist eine gemeinsame Übermittelungseinrichtung für mehrere Aufnahmeeinrichtungen vorgesehen. Beispielsweise lassen sich mehrere Aufnahmeeinrichtungen mittels einer gemeinsamen Übermittelungseinrichtung verbinden, die wiederum die Informationen an die Zentraleinrichtung übermittelt. Die Übermittelungseinrichtung kann dabei unabhängig von den mobilen Sensoreinrichtungen sein oder in eine der mobilen Sensoreinrichtungen integriert sein. Dadurch kann darauf verzichtet werden, in jede mobile Sensoreinrichtung eine Übermittelungseinrichtung zu integrieren.

Ein weiterer Gegenstand der vorliegenden Erfindung ist eine Zentraleinrichtung zum Auswerten von Informationen, die von einer mobilen Sensorvorrichtung, insbesondere der vorstehend beschriebenen Sensorvorrichtung, bereitgestellt werden, wobei die Zentraleinrichtung, vorzugsweise ein Prozessor der Zentraleinrichtung, derart konfiguriert ist, dass mittels der bereitgestellten Informationen - eine relative Ausrichtung zwischen der Sattelzugmaschine bzw. Zugmaschine und dem Sattelauflieger bzw. Anhäner, insbesondere in einem angekoppelten und/oder einem ungekoppelten Zustand und/oder
- eine Kopplungsbereitschaft
bestimmbar ist. Alle für die erfindungsgemäße mobile Sensorvorrichtung bzw. Anordnung beschriebenen Merkmale und deren Vorteile lassen sich sinngemäß ebenfalls auf die erfindungsgemäße Zentraleinrichtung übertragen und andersherum. Vorzugsweise ist die Zentraleinrichtung derart ausgestaltet, dass sie die Informationen sammelt und zusammenfügt. Dadurch lassen sich die gesammelten Informationen in der Zentraleinrichtung zur Unterstützung oder automatisierten Durchführung des Ankoppelns nutzen.

Ein weiterer Aspekt der vorliegenden Erfindung ist ein Verfahren zum Erfassen von Informationen für einen Sattelzug bzw. eine Fahrzeugkombination mit einer Sattelzugmaschine bzw. Zugmaschine und einem Sattelauflieger bzw. Anhänger, umfassend:
- lösbares Anordnen einer mobilen Sensorvorrichtung an einem Sattelauflieger bzw. Anhänger,
- Erfassen der Information mittels einer Aufnahmeeinrichtung innerhalb der mobilen Sensorvorrichtung und
- Übermitteln der Information an eine Zentraleinrichtung mittels einer Übermittelungseinrichtung. Alle für die erfindungsgemäße mobile Sensorvorrichtung, Anordnung oder Zentraleinrichtung beschriebenen Merkmale und deren Vorteile lassen sich sinngemäß ebenfalls auf die erfindungsgemäße Zentraleinrichtung übertragen und andersherum. Vorzugsweise ist die Zentraleinrichtung derart ausgestaltet, dass sie die Informationen sammelt und zusammenfügt.

Zweckmäßig wird eine Position der mobilen Sensorvorrichtung mittels der an die Zentraleinrichtung übermittelten Informationen überprüft. Dadurch lässt sich mit Vorteil sicherstellen, dass die mobilen Sensorvorrichtungen an ihrem vorgesehenen Platz montiert sind, um der Zentraleinrichtung sinnvolle Informationen zu übermitteln. Beispielsweise wird über eine Triangulation die Position der einzelnen mobilen Sensorvorrichtungen erfasst und so sichergestellt, dass sie an der richtigen Position am Sattelauflieger positioniert wurden.

Ein weiterer Aspekt der vorliegenden Erfindung ist eine Sattelzugmaschine oder Zugmaschine, wie ein Motorwagen, wobei die Sattelzugmaschine bzw. Zugmaschine einen Verstaubereich für eine mobile Sensorvorrichtung für einen Sattelzug aufweist, wobei die mobile Sensorvorrichtung eine Aufnahmeeinrichtung zum Erfassen einer Information, eine Übermittelungseinrichtung zur Übermittelung der Information, insbesondere drahtlosen Übermittelung, zu einer Zentraleinrichtung und einen Anschlussbereich zum Ankoppeln der mobilen Sensorvorrichtung an einen Sattelauflieger aufweist. Alle für die erfindungsgemäße mobile Sensorvorrichtung, Anordnung, Zentraleinrichtung und das Verfahren beschriebenen Merkmale und deren Vorteile lassen sich sinngemäß ebenfalls auf die erfindungsgemäße Sattelzugmaschine übertragen und andersherum. Im Verstaubereich lassen sich die mobilen Sensorvorrichtungen sicher verstauen, wenn sie nicht am Sattelauflieger montiert sind.

Zweckmäßig ist es vorgesehen, dass der Verstaubereich derart gestaltet ist, dass beim Fehlen der mobilen Sensorvorrichtung ein Signal an die Zentraleinrichtung übermittelt wird. Dadurch kann sichergestellt werden, dass die Sattelzugmaschine stets eine oder mehrere mobile Sensorvorrichtungen mitführt und so jederzeit der entsprechende anzukoppelnde Sattelauflieger mit den mobilen Sensorvorrichtungen ausstattbar ist.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsformen können dabei im Rahmen der Erfindung miteinander kombiniert werden.

Es zeigt:
- **Fig.1:**: Sattelauflieger mit einer mobilen Sensoreinrichtung gemäß einer ersten beispielhaften Ausführungsform der vorliegenden Erfindung,
- **Fig.2:**: Sattelzug mit einer mobilen Sensoreinrichtung gemäß einer zweiten beispielhaften Ausführungsform der vorliegenden Erfindung,
- **Fig.3a und 3b:**: Sattelzug mit einer mobilen Sensoreinrichtung gemäß einer zweiten beispielhaften Ausführungsform der vorliegenden Erfindung
- **Fig.4a und 4b:**: Sattelzug mit einer mobilen Sensoreinrichtung gemäß einer zweiten beispielhaften Ausführungsform der vorliegenden Erfindung und
- **Fig.5**: mobile Sensoreinrichtung gemäß einer dritten Ausführungsform der vorliegende Erfindung

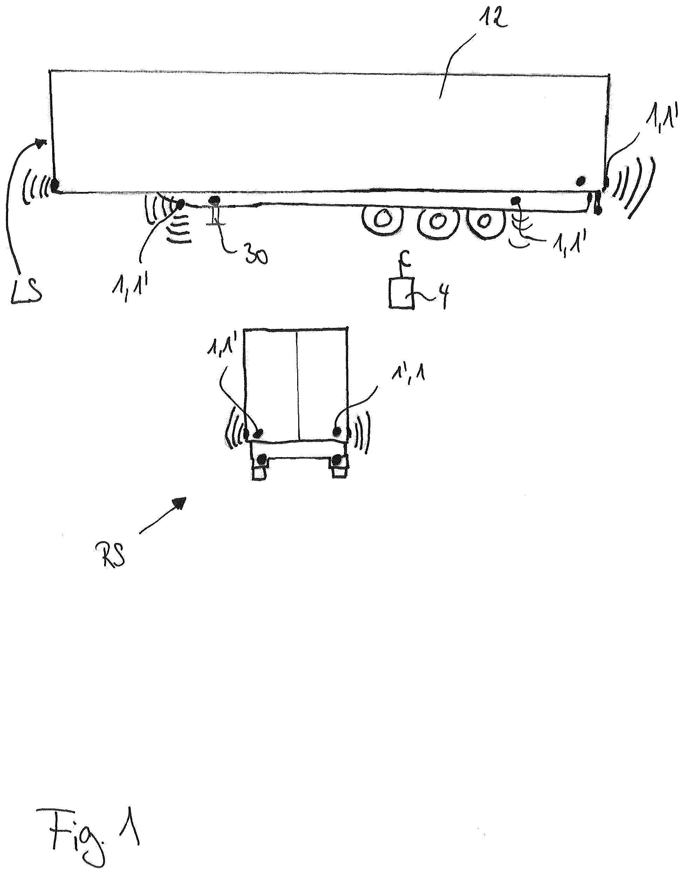

In **Figur 1** ist schematisch ein Sattelauflieger 12 mit einer mobilen Sensoreinrichtung 1 gemäß einer ersten beispielhaften Ausführungsform der vorliegenden Erfindung in zwei verschiedenen Seitenansichten dargestellt. Insbesondere sind eine Rückseite RS und eine Längsseite LS des Sattelaufliegers 12 illustriert. Vorzugsweise handelt es sich um einen Sattelauflieger 12, der zusammen mit einer Sattelzugmaschine 11 einen Sattelzug 10 bildet, wobei das Anbinden des Sattelaufliegers 12 an die Sattelzugmaschine 11 zumindest teilweise, vorzugsweise vollständig, automatisiert erfolgen soll. Zum Anbinden bzw. Ankoppeln müssen der Sattelauflieger 12 und die Sattelzugmaschine 11 entsprechend zueinander ausgerichtet bzw. rangiert werden. Dabei sind neben der Ausrichtung der Sattelzugmaschine 11 und des Sattelaufliegers 12 vorzugsweise weitere Informationen, wie eine Neigung bzw. Höhenlage des Sattelaufliegers 12, zur Klärung einer Kopplungsbereitschaft des Sattelzugs 10 zweckdienlich. Entsprechend müssen zahlreiche Informationen für ein erfolgreiches automatisches Rangieren des Sattelaufliegers 12, das schließlich in einer Anbindung des Sattelaufliegers 12 an die Sattelzugmaschine 11 endet, bereitgestellt und verarbeitet werden.

Um ein automatisiertes Rangieren bzw. Ankoppeln des Sattelaufliegers 12 an die Sattelzugmaschine 11 auch denjenigen Sattelaufliegern 12 zu ermöglichen, die nicht von Beginn an mit einer Aufnahmevorrichtung 2 zur Erfassung von Informationen ausgestattet sind, ist eine mobile Sensoreinrichtung 1 vorgesehen. Bestandteil der mobilen Sensoreinrichtung 1 ist eine Aufnahmevorrichtung 2 zur Erfassung von Informationen und eine Übermittelungseinrichtung 3 zur Kommunikation mit einer Zentraleinrichtung 4. Mittels der Übermittelungseinrichtung 3 ist es mit Vorteil möglich, die erfassten Informationen an die Zentraleinrichtung 4 zu übermitteln, vorzugsweise zu sammeln und ggf. die gesammelten Informationen auszuwerten bzw. zu einem Gesamtbild zusammenzufügen. Vorzugsweise erfolgt die Übermittelung drahtlos, beispielswiese über eine Funk- bzw. Bluetooth-Verbindung. Unter Informationen kann beispielswiese eine Bildaufnahme, eine Messgröße und/oder eine Änderung einer Messgröße verstanden werden. Weiterhin ist es vorgesehen, dass die mobile Sensorvorrichtung 1 derart konfiguriert ist, dass Informationen unmittelbar, beispielsweise innerhalb eines festgesetzten Zeitfensters, an die Zentraleinrichtung 4 übermittelt werden. Demnach sind die der Zentraleinrichtung 4 bereitgestellten Informationen vergleichsweise aktuell und können zum Rangieren des Sattelaufliegers 12 genutzt werden. Dabei ist es bevorzugt vorgesehen, dass die Zentraleinrichtung 4 in die Sattelzugmaschine 11 integriert ist, beispielsweise in einen Bordcomputer, oder in eine externe Steuerzentrale. Die externe Steuerzentrale kann wiederum beispielsweise in ein Smartphone, Tablet oder Computer integriert sein.

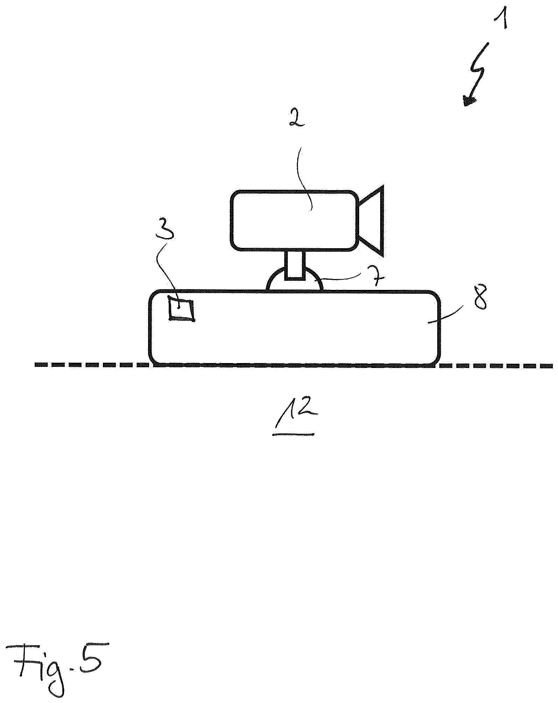

Die **Figur 5** zeigt schematisch und beispielhaft eine mobile Sensorvorrichtung 1. Diese Sensorvorrichtung 1 umfasst einen Anschlussbereich 8, der zur Anbindung an den Sattelauflieger 12 dient. Vorzugsweise ist der Anschlussbereich 8 sattelaufliegerunabhängig ausgestaltet. Beispielsweise umfasst der Anschlussbereich 8 einen Magneten und/oder einen Saugnapf, mit dem sich die mobile Sensorvorrichtung 1 an verschiedene Typen von Sattelaufliegern 12 anbinden lässt. Mittels eines Gelenks 7 lässt sich die Aufnahmevorrichtung 2 vorzugsweise nach dem Anbinden an den Sattelauflieger 12 zur Feinjustage ausrichten.

Für den in **Figur 1** dargestellten Sattelauflieger 12 sind mehrere mobile Sensorvorrichtungen 1, insbesondere mobile Sensorvorrichtungen 1' eines ersten Typs und mobile Sensoreinrichtung 1" eines zweiten Typs, vorgesehen. Beispielsweise dienen die mobilen Sensorvorrichtungen 1' des ersten Typs einer Überwachung des Rückraums und umfassen daher als Aufnahmevorrichtung 2 eine Kamera. Vorzugsweise lassen sich die mobilen Sensorvorrichtungen 1 an der Außenseite, vorzugsweise auf derselben Höhe, d. h. im selben Abstand zur Fahrbahn, am Sattelauflieger 11 montieren. Die mobilen Sensorvorrichtungen des zweiten Typs 1" dienen beispielsweise der Überwachung einer Höhenlage bzw. Neigung des Sattelaufliegers 12 zur Fahrbahn FB bzw. zu einer Mittelebene M1. Um eine positive Sattelbereitschaft zu diagnostizieren, muss beispielsweise eine sattelaufliegerseitige Kopplungselement eine entsprechende Höhe aufweisen, die ein Ankoppeln an ein komplementär ausgestaltetes weiteres Kopplungselement an der Sattelzugmaschine 11 gestattet. Beispielsweise überwacht die mobile Sensorvorrichtung 1" des zweiten Typs ein ausfahrbares Stützelement 30, insbesondere deren Ausfahrzustand.

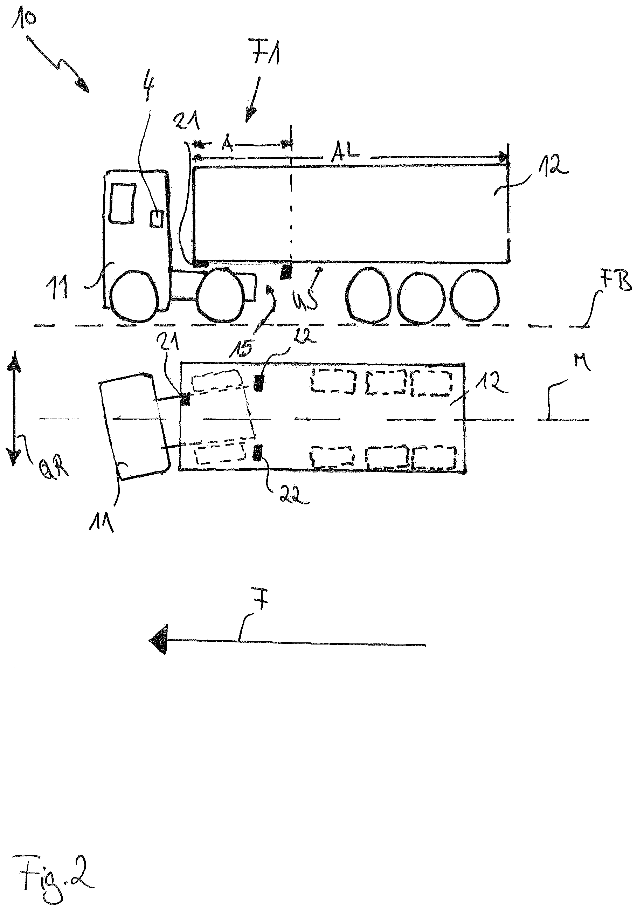

In **Figur 2** ist ein Sattelzug 10 mit einer mobilen Sensoreinrichtung 1 gemäß einer zweiten beispielhaften Ausführungsform der vorliegenden Erfindung dargestellt. Für die dargestellte Ausführungsform ist es vorgesehen, dass die mobilen Sensorvorrichtungen 1 in einem angekoppelten Zustand des Sattelzugs 10 zur Bestimmung der Ausrichtung des Sattelaufliegers 12 gegenüber der Sattelzugmaschine 11 genutzt wird. Vorzugsweise sind hier drei mobile Sensorvorrichtungen 1 vorgesehen, die in Fahrtrichtung F gesehen in einem vorderen Drittel des Sattelaufliegers 12 angeordnet sind. Insbesondere sind die mobilen Sensorvorrichtungen 1 derart am Sattelauflieger 12, beispielsweise an dessen zur Fahrbahn FB gewandte Unterseite US, angeordnet, dass sie jeweils einen Abstand zu der angekoppelten Sattelzugmaschine erfassen. Insbesondere ist eine vordere mobile Sensorvorrichtung 21 in einem Frontbereich F1 des Sattelaufliegers 12, insbesondere auf Höhe einer im angekoppelten Zustand der Sattelzugmaschine 11 zugewandten Stirnseite des Sattelaufliegers 12, angeordnet, während zwei seitliche mobile Sensorvorrichtungen 22 in Fahrrichtung F gesehen hinter der vorderen mobilen Sensorvorrichtung 21 angeordnet sind. Insbesondere ist es vorgesehen, dass ein in Fahrtrichtung F bemessener Abstand A zwischen der vorderen mobilen Sensorvorrichtung 21 und den seitlichen mobilen Sensorvorrichtungen 22 zu einer in Längsrichtung bemessenen Gesamtlänge AL des Sattelaufliegers 12 einen Wert zwischen 0,1 und 0,5, bevorzugt zwischen 0,2 und 0,4 und besonders bevorzugt zwischen 0,23 und 0,29 annimmt. Weiterhin ist es vorzugsweise vorgesehen, dass die seitlichen mobilen Sensorvorrichtungen 22 jeweils an in Querrichtung QR gesehen gegenüberliegenden Seiten am Sattelauflieger 12, vorzugsweise auf in Fahrrichtung F gesehen derselben Höhe, angeordnet sind. Mit dieser Anordnung ist es beispielsweise möglich, festzustellen, ob die Sattelzugmaschine 11 gegenüber einer Längsachse M des Sattelaufliegers 12 nach rechts oder links geneigt ist (beispielsweise für eine entsprechende Fahrt nach rechts bzw. links).

Beispielsweise kann die Zentraleinrichtung 4 anhand der übermittelten Informationen feststellen, dass sich die Sattelzugmaschine 11 gegenüber der Längsachse M verdreht hat, wenn die vordere mobile Sensorvorrichtung 21 keine Abstandsänderung zur Sattelzugmaschine 11 feststellt (als 0 in Figur 2 gekennzeichnet), während der Abstand für die eine seitliche mobile Sensorvorrichtung 22 zunimmt (mit einem + gekennzeichnet) und für die andere seitliche Sensorvorrichtung 22 abnimmt (mit einem - gekennzeichnet).

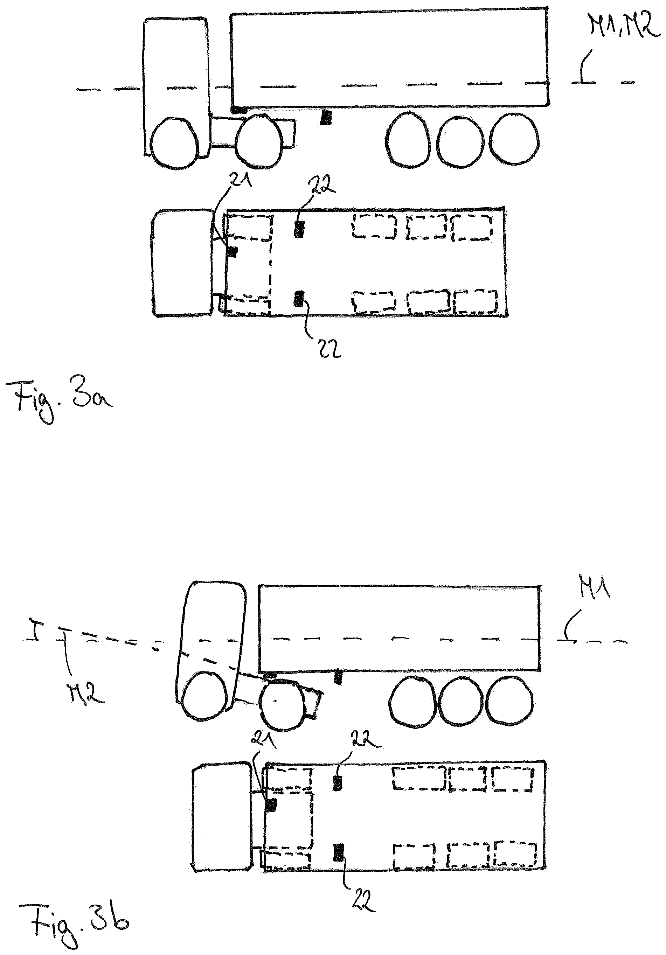

In den **Figuren 3a** und **3b** wird anhand der seitlichen mobilen Sensorvorrichtung 22 und der vorderen mobilen Sensorvorrichtung 21 eine Neigung der Sattelzugmaschine nach oben bzw. nach unten bezüglich einer Mittelebene M1 des Sattelaufliegers 12 bestimmt. Insbesondere zeigt die Figur 3b eine Situation, in der die Sattelzugmaschine mit seiner in Fahrtrichtung F gesehen vorderen Seite nach oben gekippt ist und sich infolgedessen ein von der vorderen mobilen Sensorvorrichtung 1 erfasster Abstand verkleinert (mit einem - gekennzeichnet), während in Figur 3a eine Mittelebene M2 der Sattelzugmaschine im Wesentlichen parallel zur Mittelebene M1 des Sattelaufliegers 12 verläuft, d. h. die Sattelzugmaschine 11 ist nicht gekippt.

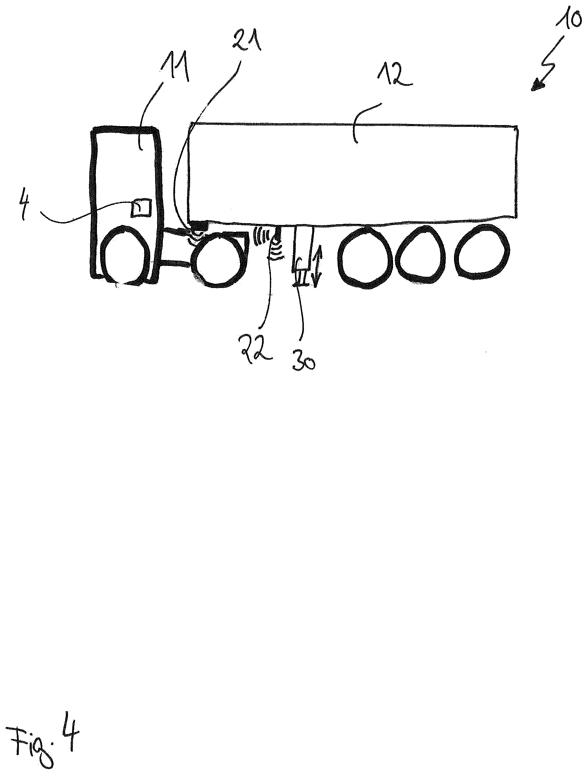

In der **Figur 4** ist illustriert, wie mittels der vorderen mobilen Sensorvorrichtung 21 und/oder den seitlichen mobilen Sensorvorrichtungen 22 ein Ankoppeln des Sattelaufliegers 12 an die Sattelzugmaschine 11 überwacht wird. Hierzu wird beispielsweise mittels der seitlichen mobilen Sensorvorrichtung 22 festgestellt, wie weit ein Stützelement 30 ausgefahren ist. Vorzugsweise ist die seitliche mobile Sensorvorrichtung 22 in Fahrtrichtung F gesehen im Bereich des Stützelements 30, vorzugsweise unmittelbar davor, angeordnet.

### Bezugszeichenliste:

- 1: mobile Sensorvorrichtung
- 1': mobile Sensorvorrichtung eines ersten Typs
- 1": mobile Sensorvorrichtung eines zweiten Typs
- 2: Aufnahmebereich
- 3: Übermittelungseinrichtung
- 4: Zentraleinrichtung
- 8: Anschlussbereich
- 10: Sattelzug
- 11: Sattelzugmaschine
- 12: Sattelauflieger
- 21: vordere mobile Sensoreinrichtung
- 22: seitliche Sensoreinrichtung
- 30: Stützelement
- F: Fahrtrichtung
- M: Längsachse
- M1: Mittelebene des Sattelaufliegers
- M2: Mittelebene der Sattelzugmaschine
- A: Abstand
- AL: Gesamtlänge
- QR: Querrichtung
- RS: Rückseite
- LS: Längsseite
- FB: Fahrbahn
- US: Unterseite
- F1: Frontbereich

## Patentansprüche

1. Mobile Sensorvorrichtung (1) für eine Fahrzeugkombination mit einer Zugmaschine und einem Anhänger, insbesondere einen Sattelzug (10) mit einer Sattelzugmaschine (11) und einem Sattelauflieger (12), umfassend
- eine Aufnahmeeinrichtung (2) zum Erfassen einer Information,
- eine Übermittelungseinrichtung (3) zur Übermittelung der Information an eine Zentraleinrichtung (4) und
- einen Anschlussbereich (8) zum lösbaren Ankoppeln der mobilen Sensorvorrichtung (1) an den Anhänger, insbesondere den Sattelauflieger (12), **dadurch gekennzeichnet, dass** bereits vorhandene Leitungen im Anhänger, insbesondere des Sattelaufliegers, zur Übermittelung der Informationen genutzt werden.

2. Mobile Sensorvorrichtung (1) gemäß Anspruch 1, wobei die Sensorvorrichtung (1) über den Anschlussbereich (8) kraft- und/oder formschlüssig mit dem Anhänger, insbesondere dem Sattelauflieger (12), verbunden oder verbindbar ist.

3. Mobile Sensorvorrichtung (1) gemäß einem der vorhergehenden Ansprüche, wobei der Anschlussbereich (8) einen Schnellspanner, einen Magneten und/oder einen Saugnapf umfasst.

4. Mobile Sensorvorrichtung (1) gemäß einem der vorhergehenden Ansprüche, wobei die Aufnahmeeinrichtung (2) eine Kamera, einen Kraftsensor, einen Neigungssensor, einen LIDAR-Sensor und/oder einen RADAR-Sensor umfasst.

5. Mobile Sensorvorrichtung (1) gemäß einem der vorhergehenden Ansprüche, wobei die Aufnahmevorrichtung (2) gegenüber dem Anschlussbereich (8) verschwenkbar und/oder verschiebbar ist.

6. Mobile Sensorvorrichtung (1) gemäß einem der vorhergehenden Ansprüche, wobei die Zentraleinrichtung (4) in die Zugmaschine, vorzugsweise in die Sattelzugmaschine (11), insbesondere einen Bordcomputer der Sattelzugmaschine (11), oder eine externe Steuerzentrale integriert ist.

7. Mobile Sensorvorrichtung (1) gemäß einem der vorhergehenden Ansprüche, wobei der Anschlussbereich (8) sattelaufliegerunabhängig ausgestaltet ist.

8. Mobile Sensorvorrichtung (1) gemäß einem der vorhergehenden Ansprüche, wobei die mobile Sensoreinrichtung (1) an einer Außenwand des Sattelaufliegers (12) anbringbar ist.

9. Anordnung von mobilen Sensorvorrichtungen (1) an einem Anhänger, insbesondere einem Sattelauflieger (12), wobei die mobilen Sensorvorrichtungen (1) derart angeordnet und/oder ausgerichtet sind, dass anhand der von den mobilen Sensorvorrichtungen (1), insbesondere von deren Aufnahmeeinrichtung (2), erfassten Informationen
- eine relative Ausrichtung zwischen Zugmaschine und Anhänger, insbesondere in einem angekoppelten und/oder einem ungekoppelten Zustand, und/oder
- eine Kopplungsbereitschaft des Anhängers
bestimmbar ist,
**dadurch gekennzeichnet, dass** bereits vorhandene Leitungen im Anhänger, insbesondere des Sattelaufliegers, zur Übermittelung der Informationen genutzt werden.

10. Anordnung gemäß Anspruch 9, wobei eine vordere mobile Sensorvorrichtung (21) in einem Frontbereich (F1) des Anhängers, insbesondere des Sattelaufliegers und zwei in einer Querrichtung (QR) zueinander versetzt angeordnete seitliche mobile Sensorvorrichtungen (22) vorgesehen sind, wobei die seitlichen mobilen Sensorvorrichtungen (22) in Fahrtrichtung (F) gesehen hinter der vorderen mobilen Sensorvorrichtung (21) angeordnet sind, wobei vorzugsweise die vordere mobile Sensorvorrichtung (21) und die seitlichen mobilen Sensorvorrichtungen (22) in einem Schnittstellenbereich (15) zwischen Zugmaschine und Anhänger, insbesondere an einer Unterseite (US) des Sattelaufliegers (12), angeordnet sind (12).

11. Anordnung von mobilen Sensoreinrichtungen gemäß Anspruch 6 oder 7, wobei eine gemeinsame Übermittelungseinrichtung für mehrere Aufnahmeeinrichtungen vorgesehen ist.

12. Zentraleinrichtung (4) zum Auswerten von Informationen, die von einer mobilen Sensorvorrichtung (1) bereitgestellt werden, wobei die Zentraleinrichtung (4) derart konfiguriert ist, dass mittels der bereitgestellten Informationen
- eine relative Ausrichtung zwischen der Zugmaschine und dem Anhänger, insbesondere in einem angekoppelten und/oder einem ungekoppelten Zustand und/oder
- eine Kopplungsbereitschaft
bestimmbar ist,
**dadurch gekennzeichnet, dass** bereits vorhandene Leitungen im Anhänger, insbesondere des Sattelaufliegers, zur Übermittelung der Informationen genutzt werden.

13. Verfahren zum Erfassen von Informationen für eine Fahrzeugkombination mit einer Zugmaschine und einem Anhänger, insbesondere einen Sattelzug (10) mit einer Sattelzugmaschine (11) und einem Sattelauflieger (12), umfassend:
- lösbares Anordnen einer mobilen Sensorvorrichtung (1) an einem Anhänger,
- Erfassen der Information mittels einer Aufnahmeeinrichtung (2) der mobilen Sensorvorrichtung (1) und
- Übermitteln der Information an eine Zentraleinrichtung (4) mittels einer Übermittelungseinrichtung (3),
**dadurch gekennzeichnet, dass** bereits vorhandene Leitungen im Anhänger, insbesondere des Sattelaufliegers, zur Übermittelung der Informationen genutzt werden.

14. Verfahren gemäß Anspruch 13, wobei eine Position der mobilen Sensorvorrichtung (1) mittels der an die Zentraleinrichtung (4) übermittelten Informationen überprüft wird.

## Claims

1. A mobile sensor device (1) for a vehicle combination with a tractor and a trailer, in particular a semitrailer train (10) with a semitrailer tractor (11) and a semitrailer (12), comprising
- a recording device (2) for recording information,
- a transmission device (3) for transmitting the information to a central device (4) and
- a connection area (8) for detachably coupling the mobile sensor device (1) to the trailer, in particular the semitrailer (12),
**characterized in that** already existing lines in the trailer, in particular of the semitrailer, are used to transmit the information.

2. The mobile sensor device (1) according to claim 1, wherein the sensor device (1) is connected or can be connected non-positively and/or positively to the trailer, in particular the semitrailer (12), via the connection area (8).

3. The mobile sensor device (1) according to any one of the preceding claims, wherein the connection area (8) comprises a quick release, a magnet and/or a suction cup.

4. The mobile sensor device (1) according to any one of the preceding claims, wherein the recording device (2) comprises a camera, a force sensor, an inclination sensor, a LIDAR sensor and/or a RADAR sensor.

5. The mobile sensor device (1) according to any one of the preceding claims, wherein the recording device (2) is pivotable and/or displaceable relative to the connection area (8).

6. The mobile sensor device (1) according to any one of the preceding claims, wherein the central device (4) is integrated into the tractor, preferably into the semitrailer tractor (11), in particular a board computer of the semitrailer tractor (11), or an external control centre.

7. The mobile sensor device (1) according to any one of the preceding claims, wherein the connection area (8) is designed independently of the semitrailer.

8. The mobile sensor device (1) according to any one of the preceding claims, wherein the mobile sensor device (1) can be attached to an outer wall of the semitrailer (12).

9. An arrangement of mobile sensor devices (1) on a trailer, in particular a semitrailer (12), wherein the mobile sensor devices (1) are arranged and/or aligned in such a way that, on the basis of the information acquired by the mobile sensor devices (1), in particular by their recording device (2),
- a relative orientation between the tractor and the trailer, in particular in a coupled and/or uncoupled state, and/or
- a readiness to couple of the trailer
can be determined,
**characterized in that** already existing lines in the trailer, in particular of the semitrailer, are used to transmit the information.

10. The arrangement according to claim 9, wherein a front mobile sensor device (21) is provided in a front section (F1) of the trailer, in particular of the semitrailer, and two lateral mobile sensor devices (22) are provided, which are arranged offset relative to one another in a transverse direction (QR), wherein the lateral mobile sensor devices (22) are arranged behind the front mobile sensor device (21) as viewed in the direction of travel (F), wherein preferably the front mobile sensor device (21) and the lateral mobile sensor devices (22) are arranged (12) in an interface portion (15) between tractor and trailer, in particular on an underside (US) of the semitrailer (12).

11. The arrangement of mobile sensor devices according to claim 6 or 7, wherein a common transmission device is provided for several recording devices.

12. A central device (4) for evaluating information provided by a mobile sensor device (1), wherein the central device (4) is configured in such a way that by means of the provided information
- a relative orientation between the tractor and the trailer, in particular in a coupled and/or uncoupled state, and/or
- a readiness to couple
can be determined,
**characterized in that** already existing lines in the trailer, in particular of the semitrailer, are used to transmit the information.

13. A method for acquiring information for a vehicle combination with a tractor and a trailer, in particular a semitrailer train (10) with a semitrailer tractor (11) and a semitrailer (12), comprising:
- detachably arranging a mobile sensor device (1) on a trailer,
- acquiring the information by means of a recording device (2) of the mobile sensor device (1) and
- transmitting the information to a central device (4) by means of a transmission device (3),
**characterized in that** already existing lines in the trailer, in particular of the semitrailer, are used to transmit the information.

14. The method according to claim 13, wherein a position of the mobile sensor device (1) is checked by means of the information transmitted to the central device (4).

## Revendications

1. Dispositif de détection mobile (1) pour une combinaison de véhicule comportant un tracteur et une remorque, en particulier pour un véhicule articulé (10) comportant un tracteur de semi-remorque (11) et une semi-remorque (12), comprenant
- un moyen d'enregistrement (2) pour acquérir des informations,
- un moyen de transmission (3) pour transmettre les informations à un moyen central (4), et
- une zone de connexion (8) pour coupler de manière détachable le dispositif de détection mobile (1) à la remorque, en particulier à la semi-remorque (12),
**caractérisé en ce que**
des lignes déjà existantes dans la remorque, en particulier de la semi-remorque, sont utilisées pour transmettre les informations.

2. Dispositif de détection mobile (1) selon la revendication 1,
dans lequel le dispositif de détection (1) est relié ou peut être relié à la remorque, en particulier à la semi-remorque (12), par coopération de force et/ou de forme, par l'intermédiaire de la zone de connexion (8).

3. Dispositif de détection mobile (1) selon l'une des revendications précédentes,
dans lequel la zone de connexion (8) comprend un moyen de serrage rapide, un aimant et/ou une ventouse.

4. Dispositif de détection mobile (1) selon l'une des revendications précédentes,
dans lequel le moyen d'enregistrement (2) comprend une caméra, un capteur de force, un capteur d'inclinaison, un capteur LIDAR et/ou un capteur RADAR.

5. Dispositif de détection mobile (1) selon l'une des revendications précédentes,
dans lequel le moyen d'enregistrement (2) est mobile en pivotement et/ou en translation par rapport à la zone de connexion (8).

6. Dispositif de détection mobile (1) selon l'une des revendications précédentes,
dans lequel le moyen central (4) est intégré dans le tracteur, de préférence dans le tracteur de semi-remorque (11), en particulier dans un ordinateur embarqué du tracteur de semi-remorque (11), ou dans un centre de commande externe.

7. Dispositif de détection mobile (1) selon l'une des revendications précédentes,
dans lequel la zone de connexion (8) est conçue indépendamment de la semi-remorque.

8. Dispositif de détection mobile (1) selon l'une des revendications précédentes,
dans lequel le dispositif de détection mobile (1) peut être monté sur une paroi extérieure de la semi-remorque (12).

9. Ensemble de dispositifs de détection mobiles (1) sur une remorque, en particulier sur une semi-remorque (12), les dispositifs de détection mobiles (1) étant disposés et/ou orientés de manière à permettre de déterminer, sur la base des informations acquises par les dispositifs de détection mobiles (1), en particulier par leur moyen d'enregistrement (2),
- une orientation relative entre le tracteur et la remorque, en particulier dans un état attelé et/ou dételé, et/ou
- une disponibilité pour l'attelage de la remorque,
**caractérisé en ce que**
des lignes déjà existantes dans la remorque, en particulier de la semi-remorque, sont utilisées pour transmettre les informations.

10. Ensemble selon la revendication 9,
dans lequel prévu un dispositif de détection mobile avant (21) est prévu dans une zone avant (F1) de la remorque, en particulier de la semi-remorque, et deux dispositifs de détection mobiles latéraux (22) sont disposés de manière décalée l'un par rapport à l'autre dans une direction transversale (QR), les dispositifs de détection mobiles latéraux (22) étant disposés derrière le dispositif de détection mobile avant (21), vu dans le sens de déplacement (F), le dispositif de détection mobile avant (21) et les dispositifs de détection mobiles latéraux (22) étant de préférence disposés (12) dans une zone d'interface (15) entre le tracteur et la remorque, en particulier sur une face inférieure (US) de la semi-remorque (12).

11. Ensemble de dispositifs de détection mobiles selon la revendication 6 ou 7,
dans lequel un moyen de transmission commun est prévu pour plusieurs moyens d'enregistrement.

12. Moyen central (4) pour l'évaluation d'informations fournies par un dispositif de détection mobile (1), le moyen central (4) étant configuré de telle sorte que les informations fournies permettent de déterminer
- une orientation relative entre le tracteur et la remorque, en particulier dans un état attelé et/ou dételé, et/ou
- une disponibilité pour l'attelage,
**caractérisé en ce que**
des lignes déjà existantes dans la remorque, en particulier de la semi-remorque, sont utilisées pour transmettre les informations.

13. Procédé d'acquisition d'informations pour une combinaison de véhicule comprenant un tracteur et une remorque, en particulier pour un véhicule articulé (10) comprenant un tracteur de semi-remorque (11) et une semi-remorque (12), consistant à :
- disposer de manière détachable un dispositif de détection mobile (1) sur une remorque,
- acquérir l'information à l'aide d'un moyen d'enregistrement (2) du dispositif de détection mobile (1), et
- transmettre l'information à un moyen central (4) à l'aide du moyen de transmission (3),
**caractérisé en ce que**
des lignes déjà existantes dans la remorque, en particulier de la semi-remorque, sont utilisées pour transmettre les informations.

14. Procédé selon la revendication 13,
dans lequel une position du dispositif de détection mobile (1) est vérifiée à l'aide des informations transmises au moyen central (4).
